# EUROPEAN PATENT APPLICATION

(11) **EP 4 480 779 A1**
(43) Date of publication of application: **25.12.2024**
(21) Application number: 24182914.2
(22) Date of filing: 18.06.2024
(51) Int. Cl.: B61D 3/18, B61D 3/20

(54) **APPARATUS FOR POWERING A REFRIGERATION UNIT OF A CARGO CONTAINER**

(30) Priority: 19.06.2023 US 202363508925 P
(71) Applicant: Carrier Corporation, Palm Beach Gardens, FL 33418 (US)
(72) Inventor: VAN HASSEL, Bart, Palm Beach Gardens, 33418 (US)
(74) Representative: Dehns

(57) **Abstract**

A railcar chassis (402) for transporting a cargo container (420) is disclosed. The railcar chassis (402) includes a storage portion (406) configured to receive the cargo container (420) having a refrigeration unit (408). The railcar chassis (402) also includes at least one power unit (404) positioned proximate to the storage portion (406) and configured to provide electrical power to the refrigeration unit (408).

## Description

### FIELD OF THE INVENTION

The invention relates to aspects of an apparatus for powering a refrigeration unit installed on a cargo container.

### BACKGROUND

Cargo containers are large boxes used to transport goods, such as perishable items, like food items, pharmaceutical products, or medical items by either ship, railways, or trucks/lorry. Cargo containers are designed in such a way that they can be transported both by ship as maritime transport means or by trucks/railways as drayage transport means. In drayage transport, the cargo container along with the cooling unit is installed on a railcar chassis or a truck chassis for transportation. Cargo containers that transport perishable items may have additional units, such as a cooling unit with a power generator and a refrigeration unit to maintain a low temperature inside the cargo container. The cooling unit is generally mounted on a front face of the cargo container and the cargo container includes ducts that couple to the cooling unit to circulate cold air through the cargo container. Some of the cargo container may draw power from a prime mover of the transport means. Further, the cargo container is designed to be able to cool the perishable item even when the cargo container is not connected to the maritime transport means, such as the cargo ship power or the rail power, and when the lorry parks the trolly and drives away.

There are various limitations associated with current types of cargo containers and means for transporting such cargo containers. For instance, the cooling unit reduces the volume of the cargo container that can be used to store and ferry perishable items. One of the ways to mitigate these issues is an external source of power, such as by drawing power from a prime mover of the truck/train to power the refrigeration unit. However, such an arrangement results in additional fuel consumption by the prime mover along with a reduction in the performance of the transport means in terms of range and cargo ferrying capacity. In order to compensate for the reduction in performance, transport means with a large-sized prime mover may be employed which further increases the cost of transport. Moreover, additional fuel consumption also increases emissions, such as carbon dioxide, other greenhouse gas emissions (e.g. NOx, unburned hydrocarbons), and particulates which makes transportation unsafe for the environment.

Another way to mitigate this issue is to use detachable cooling units that are mounted on the cargo container. However, the detachable cooling units have a limited performance owing to the smaller capacity of fuel that the detachable cooling unit can carry or the small size of the battery that can be fitted in the detachable cooling unit. Yet another way to mitigate this issue is to use more than one detachable cooling unit to compensate for the limited capacity of the detachable cooling units. However, the cargo container may not have space to install the detachable cooling unit. An additional issue of using either one or more detachable cooling units is an increase in time to install or uninstall the detachable cargo unit, especially when the cargo containers are transferred from maritime transport means to drayage transport means.

### SUMMARY

This summary is provided to introduce a selection of concepts, in a simplified format, that is further described in the detailed description of the invention. This summary is neither intended to identify key or essential inventive concepts of the invention nor is it intended for determining the scope of the invention which is as set out in the appended claims.

According to a first aspect of the invention there is provided a railcar chassis for transporting a cargo container. The railcar chassis includes a storage portion configured to receive the cargo container having a refrigeration unit. The railcar chassis also includes at least one power unit positioned proximate to the storage portion and configured to provide electrical power to the refrigeration unit.

Optionally, the at least one power unit includes a first power unit having a storage cylinder configured to store hydrogen fuel and a power generator detachably installed on the cargo container and coupled to the storage cylinder to receive the hydrogen fuel for generating a first predefined amount of electrical power for the refrigeration unit.

Optionally, the at least one power unit includes a second power unit, such that the second power unit is a battery configured to provide a second predefined amount of electrical power to the refrigeration unit.

Optionally, the power generator is an internal combustion engine coupled to an electric generator, or a fuel cell system.

Optionally, the first power unit and the second power unit are installed underneath the storage portion.

Optionally, one of the first power unit and the second power unit are attached to the cargo container.

According to a second aspect of the invention there is provided a railcar that includes a cargo container having a refrigeration unit and a railcar chassis. The railcar chassis includes a storage portion configured to receive the cargo container having a refrigeration unit. The railcar chassis also includes at least one power unit positioned proximate to the storage portion and configured to provide electrical power to the refrigeration unit.

Optionally, the cargo container has a container chassis configured to receive a cargo hold and the at least one power unit is detachably installed on the container chassis.

Optionally, the at least one power unit includes a first power unit having a storage cylinder configured to store hydrogen fuel and a power generator detachably installed on the cargo container and coupled to the storage cylinder to receive the hydrogen fuel for generating a first predefined amount of electrical power for the refrigeration unit.

Optionally, the at least one power unit includes a second power unit, such that the second power unit is a battery configured to provide a second predefined amount of electrical power to the refrigeration unit.

Optionally, the power generator is an internal combustion engine coupled to an electric generator, or a fuel cell system.

According to a third aspect of the invention there is provided a cargo freight system that includes a storage portion and a plurality of cargo containers installed in the storage portion. Further, the cargo container has a refrigeration unit. In addition, the cargo freight system includes at least one power unit positioned proximate to the storage portion and configured to provide electrical power to the refrigeration unit.

Optionally, the cargo freight system is a cargo ship and at least one power unit is installed in the hull of the cargo ship.

Optionally, the cargo freight system is a freight train having a railcar, The railcar comprises a railcar chassis having a storage section and the at least one power unit is installed on the railcar chassis.

Optionally, the at least one power unit includes a first power unit having a storage cylinder configured to store hydrogen fuel and a power generator detachably installed on the cargo container and coupled to the storage cylinder to receive the hydrogen fuel for generating a first predefined amount of electrical power for the refrigeration unit.

Optionally, the at least one power unit includes a second power unit, such that the second power unit is a battery configured to provide a second predefined amount of electrical power to the refrigeration unit.

Optionally, the first power unit and the second power unit are installed underneath the storage portion.

Optionally, one of the first power unit and the second power unit are attached to the cargo container.

To further clarify the advantages and features of the invention, a more particular description of the invention will be rendered by reference to specific exemplary embodiments thereof, which are illustrated in the appended drawings. It is appreciated that these drawings depict only typical embodiments of the invention and are therefore not to be considered limiting of its scope which is set out in the appended claims. The invention will be described and explained with additional specificity and detail in the accompanying drawings.

### BRIEF DESCRIPTION OF THE DRAWINGS

These and other features, aspects, and advantages of the invention will become better understood by way of example only when the following detailed description is read with reference to the accompanying drawings in which like characters represent like parts throughout the drawings, wherein:
Figure 1 shows a maritime cargo freight system for maritime transport;
Figure 2 shows a drayage cargo freight system for railway transport having a plurality of railcars having a power unit on one of the railcars;
Figure 3 shows another railway cargo freight system having a plurality of railcars having a power unit on two railcars;
Figure 4 shows a railcar having a railcar chassis and a first power unit underneath the railcar chassis;
Figure 5 shows a railcar having the railcar chassis and the first power unit on the railcar chassis;
Figure 6 shows a railcar with a cargo container and the first power unit having a clip-on power unit;
Figure 7 shows the railcar shown in Figure 6 with an additional storage cylinder;
Figure 8 shows a railcar with a trailer chassis and the first power unit attached thereto;
Figure 9 shows the railcar with the trailer chassis with additional hydrogen storage and the first power unit attached thereto;
Figure 10 shows a cargo freight system with a plurality of railcars having a second power unit on one of the railcars.
Figure 11 shows a railcar having a railcar chassis and a second power unit underneath the railcar chassis;
Figure 12 shows a railcar having the railcar chassis and the first power unit on the railcar chassis;
Figure 13 shows a railcar with a container chassis and the first power unit; and
Figure 14 shows a railcar with a truck having a container chassis with an additional battery and the first power unit.

Further, skilled artisans will appreciate that elements in the drawings are illustrated for simplicity and may not have necessarily been drawn to scale. Furthermore, in terms of the construction of the device, one or more components of the device may have been represented in the drawings by conventional symbols, and the drawings may show only those specific details that are pertinent to understanding the embodiments of the invention so as not to obscure the drawings with details that will be readily apparent to those of ordinary skill in the art having the benefit of the description herein.

### DETAILED DESCRIPTION OF FIGURES

For the purpose of promoting an understanding of the principles of the invention, reference will now be made to the various embodiments and specific language will be used to describe the same. It will nevertheless be understood that no limitation of the scope of the invention as set out in the appended claims is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the invention. Thus, appearances of the phrase "in an embodiment", "in another embodiment", "some embodiments", "one or more embodiments" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Embodiments of the invention will be described below in detail with reference to the accompanying drawings.

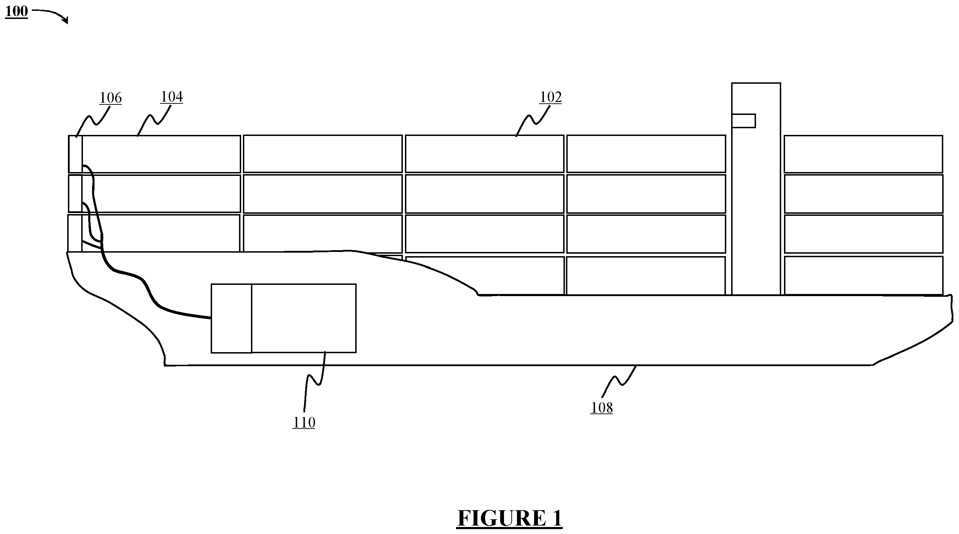

Figure 1 illustrates a maritime cargo freight system 100 for maritime transport, according to an embodiment of this invention. The cargo freight system 100 of this invention is configured to haul different types of cargo containers 102, and 104. Further, some of the cargo container 104 may include a refrigeration unit 106 that provides cooling for perishable food items. Furthermore, the cargo freight system 100 may be configured to provide power to the refrigeration unit 106 of each of the plurality of cargo containers 104. The cargo freight system 100 may have a hull 108 provided with a storage portion that houses the cargo containers 102, and 104. In one example, the storage section may extend only up to a portion of the hull 108 to house some of the cargo container 104. In another example, the storage section may extend up to the complete length of the hull 108 to house the other type of cargo container 102.

The cargo freight system 100 may include one or more power units 110 that are configured to provide power to the refrigeration unit 106. The power unit may be a unit that may hold a storage cylinder or a battery. In a broader sense, the "power unit" could also comprise the power generator, such as the fuel cell system and power distribution unit, or the battery with power distribution unit. The power unit 110 can either be a first power unit or a second power unit depending upon the source of their power generation. For instance, the first power unit is a hydrogen fuel-based power generator with a power distribution system, and the second power unit is a battery pack with a power distribution system. The power distribution system may be a device adapted to supply electric power as per a rated parameters of the cooling units. For instance, the power distribution system may include components, such as voltage boosters, transformers that may boost the voltage of received direct current (DC) electric power and converts the boosted DC voltage to alternating current (AC). In addition, the power distribution system may include an AC filter circuit. Details of each type of power unit may be provided in subsequent embodiments. The cargo freight system 100 of this invention cools the perishable items in the cargo containers 104 without having a separate refrigerating system to provide cooling.

According to this invention, the cargo freight system can have another configuration. For instance, the cargo freight system can also be a railway transport means, details of which will be explained in the next embodiments.

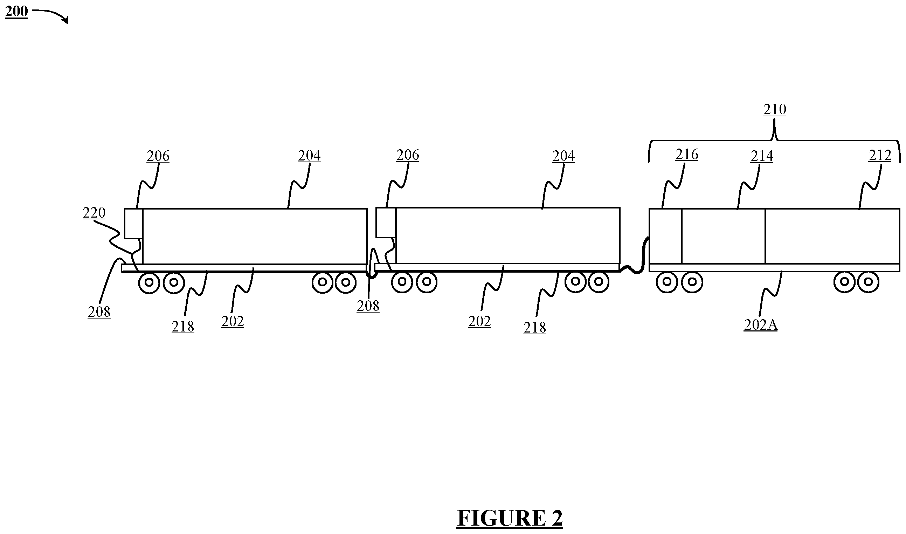

Figure 2 illustrates a railway cargo freight system 200 having a plurality of railcars 202, according to an embodiment of this invention. The railway cargo freight system 200 is a train having the railcars 202. Further, each railcar 202 may have a storage section 208 that houses a cargo container 204 thereon. Further, each cargo container 204 may include a refrigeration unit 206. Furthermore, one of the railcars 202A may have a storage section 208 which houses a power unit 210. The power unit 210, in one example, is a first power unit 210. The first power unit 210 may include a storage cylinder 212 that may hold hydrogen fuel. The hydrogen fuel can be stored in gaseous form or liquid form. In addition, the first power unit 210 may include a power generator 214 that is coupled to the storage cylinder 212 and may be configured to generate a first predefined amount of electric power for the refrigeration unit 206. The power generator 214 may either be an internal combustion (IC) engine that burns hydrogen fuel for an electric generator that is powered by the IC engine to generate a first predetermined amount of electric power. Alternatively, the power generator 214 may be a fuel-cell system that uses hydrogen fuel to produce the first predetermined amount of electric power.

The first power unit 210 may also include a power distributor 216 that may be coupled to the power generator 214 and may supply the first predefined amount of electric power to the refrigeration unit 206 of each cargo container 204. As shown in Figure 2, the first power unit 210 is installed on a railcar 202A and powers the refrigeration unit 206. In order to power the refrigeration unit 206, the railcar 202 may include a transmission line 218 that connects to an adjacent transmission line 218. In addition, each refrigeration unit 206 may include a cord 220 that couples to the transmission line 218. Further, the transmission line 218 and the cord 220 can be easily coupled/decoupled when the cargo container 204 is installed/uninstalled from the railcar 202. Such an arrangement allows for a quick re-supply of electric power to refrigeration unit 206 when the cargo containers 204 are uninstalled from the maritime cargo freight system 100 to the drayage freight system 200. Moreover, the provision of the first power unit 210 eliminates the need for the power generator 214 on the cargo container 202. Such an arrangement allows for a maximum volume available for carrying the items and also reduces the overall weight of the cargo container 202.

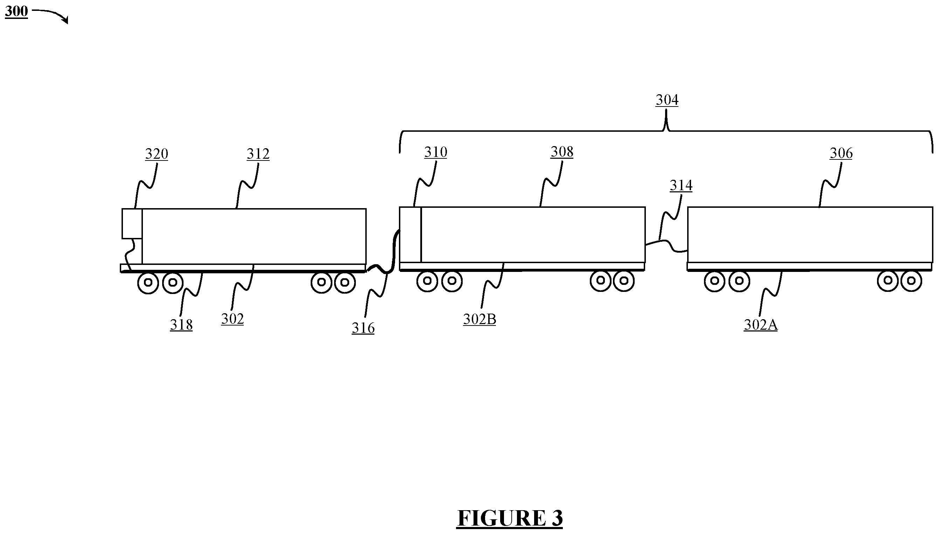

In one example, the first power unit 210 may be designed in such a way that the components of the first power unit 210 may be installed on different railcars. Such an example is shown in Figure 3 which shows another drayage freight cargo system 300 having a plurality of railcars 302 and a first power unit 304, according to an embodiment of the present invention. In the illustrated example, the first power unit 304 may include a storage cylinder 306 installed on a railcar 302A and a power generator 308 on another railcar 302B. In addition, the first power unit 304 may include a power distributor 310 on the railcar 302B. Further, the railcars 302A and 302B may be the last and second to last bogey, respectively, in the drayage cargo freight system 300 and the railcars 302 having the cargo container 312 with a refrigeration unit 320 may be installed as forward bogeys. Further, the storage cylinder 306 may have a fuel line 314 that couples with the power generator 308. Furthermore, the power distributor 310 has a cord 316 that couples to the transmission line 318 of the railcar 302.

Provision of a separate storage cylinder 306 on one of the railcar 302A allows for storing larger volume of hydrogen fuel thereby enabling production of electric power for a longer duration. Further, provision of power generator 308 on the other railcar 302B allows for the use of greater size power generator 308 which may result in larger amount of electric power generation. Further, the production of the larger amount of electric power allows for a greater number of cargo railcars 302 with container 312 that can be added to the drayage freight cargo system 300. Moreover, additional power can be used to provide the supply of power to the refrigeration unit 320 for a longer duration.

According to this invention, the railcar can have individual power units in different configurations. Exemplary embodiments of different combinations in explained in subsequent paragraphs.

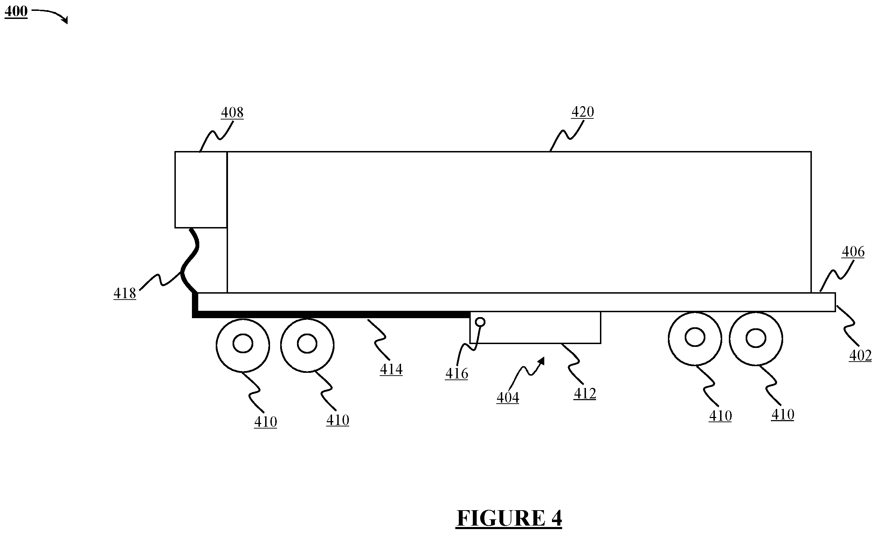

Figure 4 illustrates a railcar 400 having a railcar chassis 402 and the first power unit 404 underneath the railcar chassis 402, according to an embodiment of this invention. The railcar chassis 402 may include a storage portion 406 that may be formed on the top side of the railcar chassis 402. As shown in Figure, the storage portion 406 may be configured to receive a cargo container 420 that has a refrigeration unit 408. Although not visible, the power generator of the first generator unit is inside the refrigeration unit 408. The railcar chassis 402 may also include a set of wheels 410 that enables the railcar 400 to traverse on rails. Further, the first power unit 404 has a storage cylinder 412 that is installed underneath the section the railcar chassis 402. The underneath section of the railcar chassis 402 extends along an entire length of railcar chassis 402. and therefore, the railcar chassis 402 can accommodate a large capacity storage cylinder 412. A large capacity storage cylinder 412 allows for a longer period of running of the refrigeration unit 408. Further, the storage cylinder 412 may also include a fill port 416 to allow the refill of hydrogen fuel and a fuel line 414 to supply the hydrogen fuel to the refrigeration unit 408 via a hose 418.

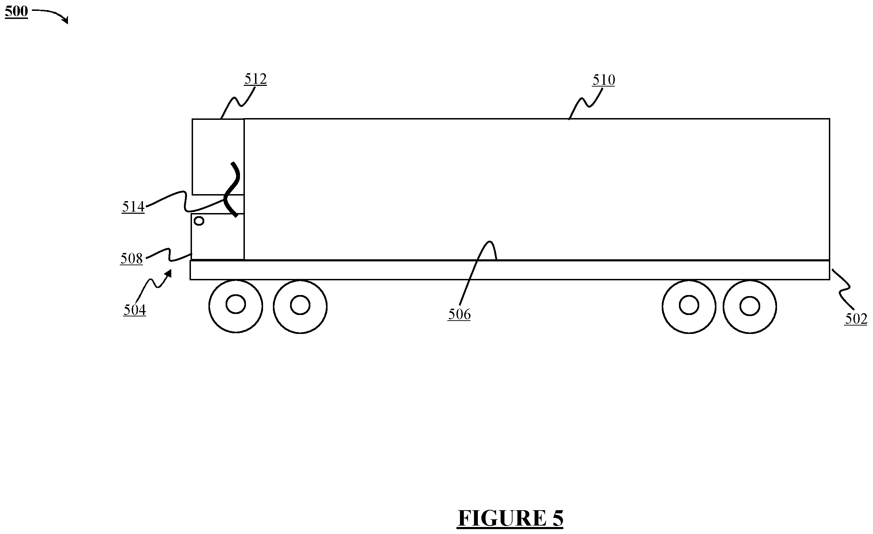

Figure 5 illustrates a railcar 500 having a railcar chassis 502 and the first power unit 504 on a storage section 506 of the railcar chassis 502, according to an embodiment of this invention. In such a configuration, a storage cylinder 508 is placed next to a cargo container 510 installed on the storage section 506. The storage cylinder 508 is a smaller section than the large-sized storage cylinder 508 shown in Figure 4 and may be coupled to a refrigeration unit 512 of the cargo container 510. Such a configuration may be used to provide fuel for generating electric power for a short duration or for smaller cooling needs. Moreover, a smaller-sized storage cylinder 508 allows direct coupling to the hose 514 of the refrigeration unit 512 without a need for a fuel line similar to the fuel line 414 shown in Figure 4.

During the transit of the cargo container 510 or the cargo container 420, the fuel may be provided by their respective storage cylinder 508, and the storage cylinder 412. Further, when the cargo container 510 or the cargo container 420 are transferred from the railcar to a lorry, the refrigeration unit 512 or the refrigeration unit 408 may be disconnected from their respective storage cylinder and may be coupled to another storage cylinder on the lorry.

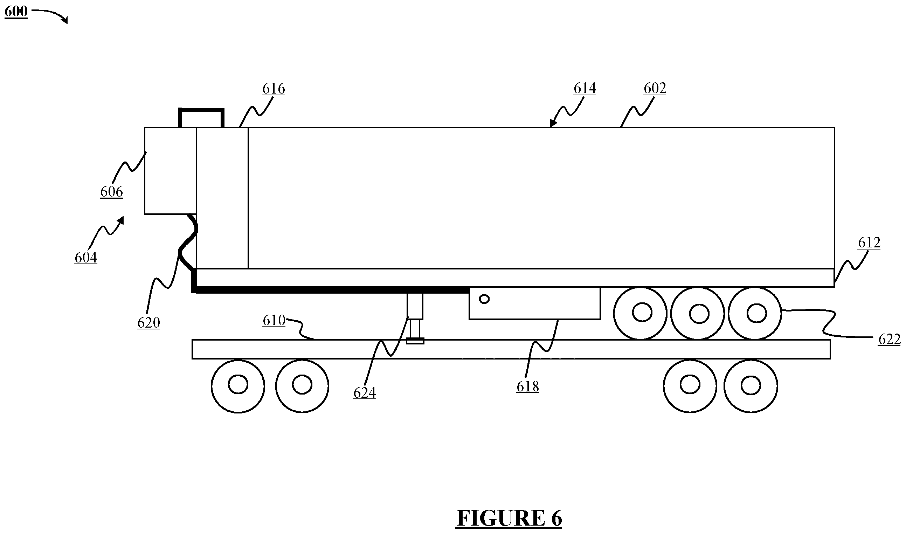

The foregoing embodiment relates to a scenario where the cargo container may be transferred to a container chassis of a lorry or a truck for further inland transport. In some scenarios, the railcar may accommodate the container chassis that may be further connected to a semi-trailer truck. Such embodiments are now described with respect to Figures 6 to 9.

Figure 6 illustrates a railcar 600 with a cargo container 602 and the first power unit 604 having a clip-on power generator 606, according to an embodiment of the invention. In the illustrated example, the railcar 600 may include a railcar chassis 608 having a storage section 610 that may receive the cargo container 602. Further, the cargo container 602 may include a container chassis 612 and a cargo hold 614 adapted to hold perishable items. The cargo container 602 may also include a refrigeration unit 616 that may provide cooling to the cargo hold 614. Further, the first power unit 604 may include a storage cylinder 618 that may be uninstalled underneath the container chassis 612. In addition, the cargo container 602 may include a set of wheels 622 that allows the cargo container 602 to be hauled on road by a semi-trailer truck. In addition, the cargo container 602 may include a landing gear 624 that allows the cargo container 602 to park whenever needed during inland transit. The landing gear 624 may also provide a means to balance and anchor the container chassis 602 to the storage section 610 of the rail chassis 600.

The power generator 606 may include a hose 620 that may connect the storage cylinder 618 to supply hydrogen fuel to the power generator 606. In the illustrated example, the power generator 606 may be detachably installed on the refrigeration unit 616 and may generate the first predetermined amount of electric power as long as the cargo container 602 is installed on the railcar chassis 608.

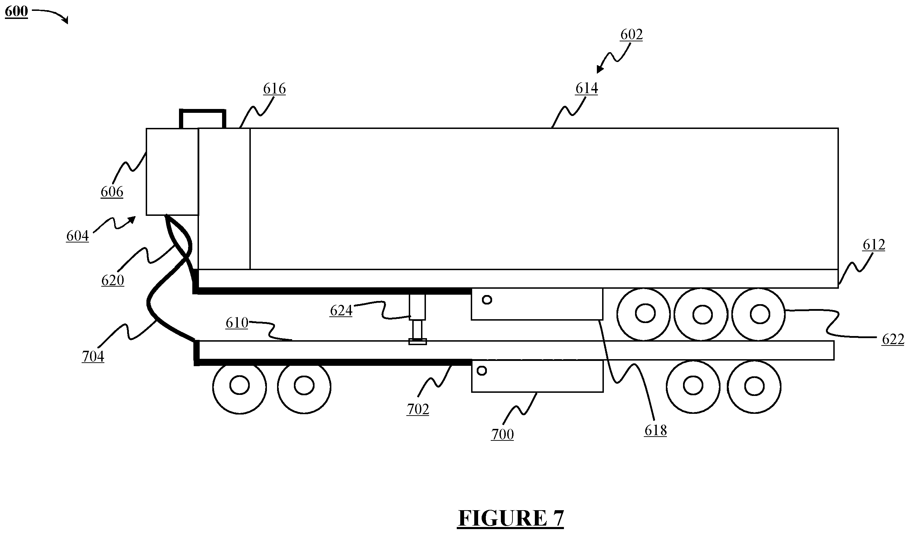

In one example, additional storage cylinders may be provided in the railcar to extend the electric power generation. Such a configuration is explained with respect to Figure 7 which illustrates the railcar 600 shown in Figure 6 with an additional storage cylinder 700. The additional storage cylinder 700 may be installed underneath the railcar chassis 608 and may include a fuel line 702 and a hose 704 that connects to the power generator 606. Such an arrangement may have different configurations. In one configuration, the power generator 606 may receive hydrogen fuel storage from both storage cylinders simultaneously. In another configuration, the additional storage cylinder 700 may provide hydrogen fuel to the power generator 606, and the storage cylinder 618 may be used when the additional storage cylinder 700 is consumed. In yet another configuration, the additional storage cylinder 618 may provide hydrogen fuel when the cargo container 602 is uninstalled from the railcar 600 and deployed as a lorry of the semi-trailer truck for further inland transit.

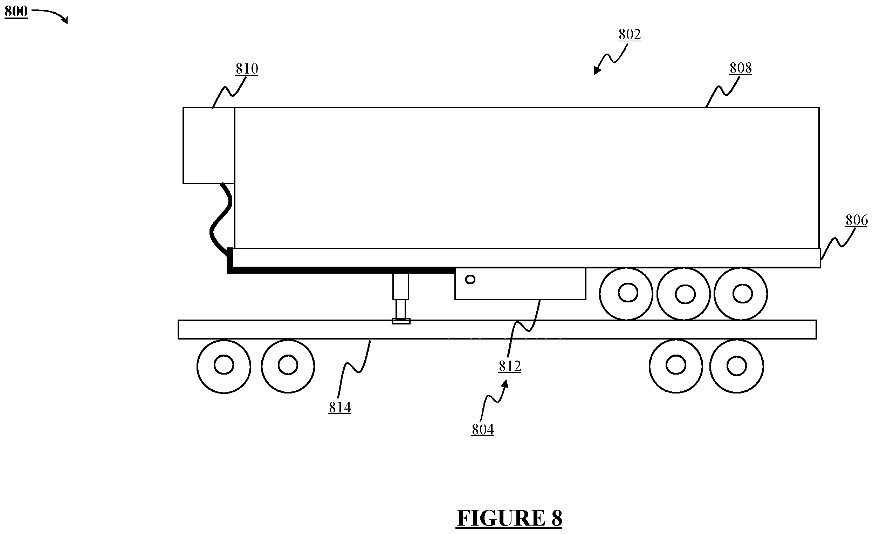

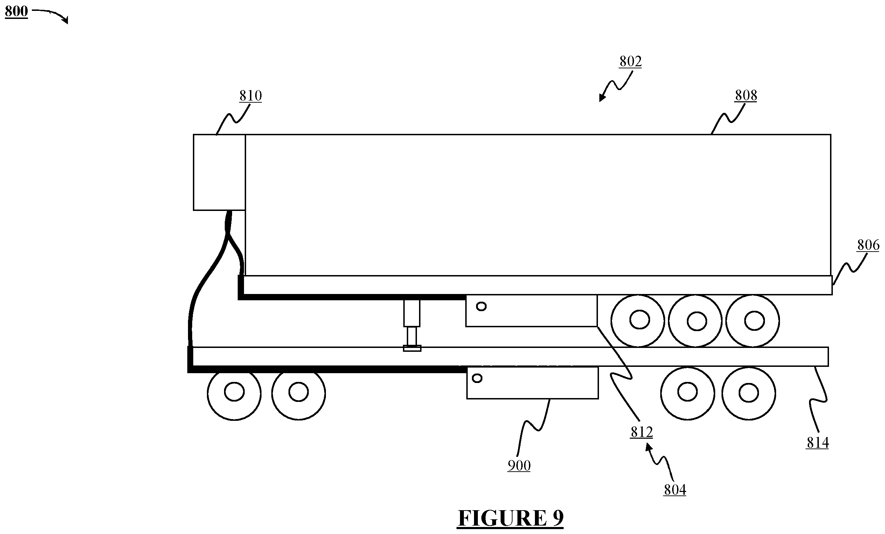

According to this invention, the power generator 606 can also be an integral part of the refrigeration unit in case the cargo container is a trailer. Such a design is illustrated in Figures 8 and 9.

Figure 8 illustrates a railcar 800 with a trailer 802 and the first power unit 804, according to an embodiment of the invention. The trailer 802, mounted on a railcar chassis 814, may include a trailer chassis 806, a cargo hold 808 supported on the trailer chassis 806, and a refrigeration unit 810. In the illustrated example, the first power unit 804 has a storage cylinder 812 mounted on the trailer chassis 806 and a power generator integrated into the refrigeration unit 810. In such a configuration, a detachable power generator may not be needed and the trailer 802 may directly be attached to the semi-trailer truck while the refrigeration unit 810 continues to cool the cargo hold 808.

In one example, the railcar 800 may have an additional storage cylinder 900 as shown in Figure 9. The additional storage cylinder 900 may be installed underneath the railcar chassis 814. Further, the additional storage cylinder 900 enables different configurations as explained above with respect to Figure 7.

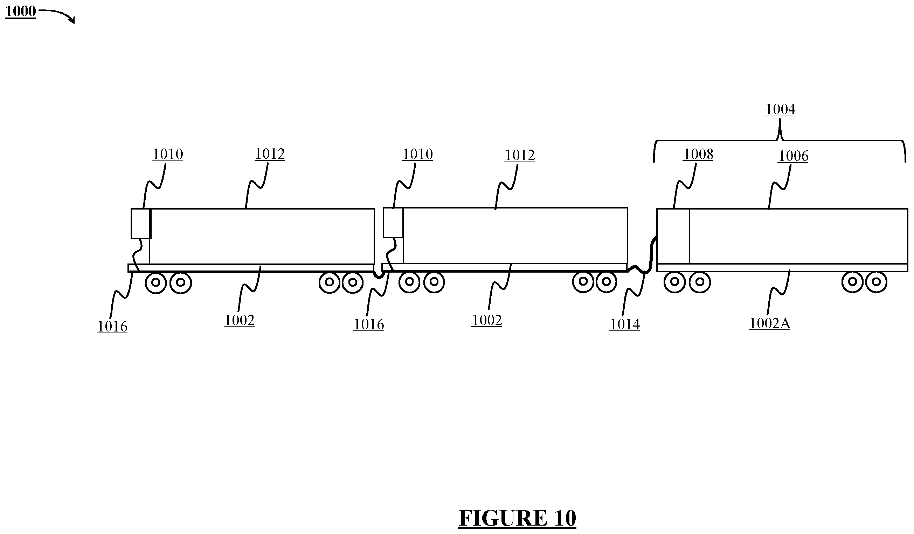

According to this invention, the power unit may have different configurations or may be of different types to provide electric power to the refrigeration unit. Another type of power unit may be a second power unit that may be adapted to provide a second predetermined amount of electric power to the refrigeration unit. Such power units are explained in Figure 10 onwards.

Figure 10 illustrates a drayage cargo freight system 1000 having a plurality of railcars 1002 and a second power unit 1004 on one of the railcars 1004. Further, the railcar 1002 may have a similar construction as the railcar 202 shown in Figure 2. Accordingly, the details of the railcar 1002 are not repeated for brevity. In the illustrated example, the second power unit 1004 may be a battery 1006 that may be installed on the last railcar 1002A. In addition, the second power unit 1004 may include a power distributor 1008 that may act as a battery management system adapted to supply the second predetermined amount of electric power to each refrigeration unit 1010 of the cargo containers 1012 on the railcars 1002. The battery 1006, in one example, may be a lithium-ion battery, and in another example, maybe a lead-acid battery. The second power unit 1004 may include electric wires 1014 that connect to the connecting cables 1016 of the refrigeration unit 1010. In one example, the second power unit 1004 may also provide wireless charging to the refrigeration unit 1010. Although not shown, the second power unit 1004 may act as a battery power bank for refrigeration unit 1010 of the cargo container 1012.

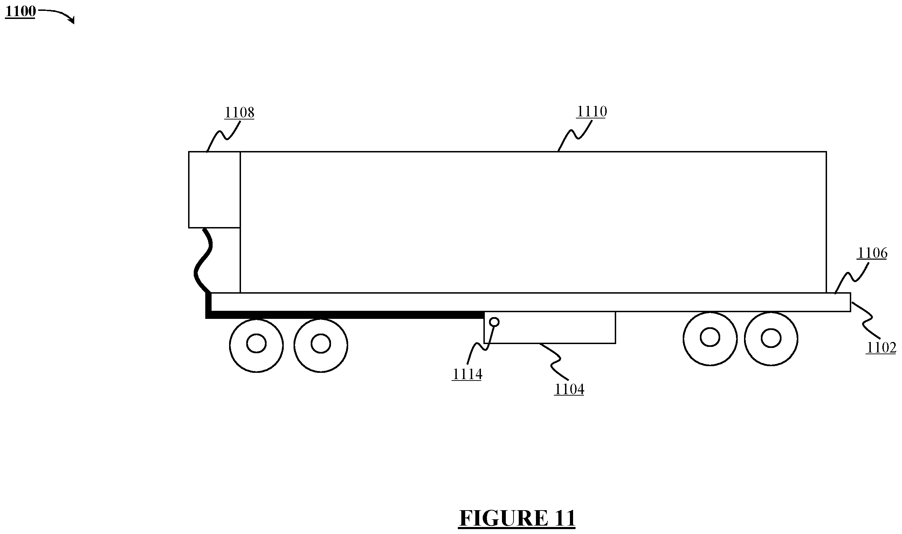

The second power unit 1004 may also be implemented as an individual unit for the railcars. Such implementations are illustrated with respect to Figures 11 to 15.

Figure 11 illustrates a railcar 1100 having a railcar chassis 1102 and the second power unit 1104 underneath the railcar chassis 1102, according to an embodiment of this invention. The railcar chassis 1102 may include a storage portion 1106 that may be formed on a top side of the railcar chassis 1102 and may be configured to receive a cargo container 1110 that has a refrigeration unit 1108. Further, the second power unit 1104 has a battery pack installed underneath the railcar chassis 1102. In the illustrated example, a large-sized second power unit 1104 may be installed over a complete length of the railcar chassis 1102 that allows for a longer time period of running of the refrigeration unit 1108. Further, the second power unit 1104 may also include a charging port 1114 to allow re-charging of the battery in the second power unit 1104 via a cord.

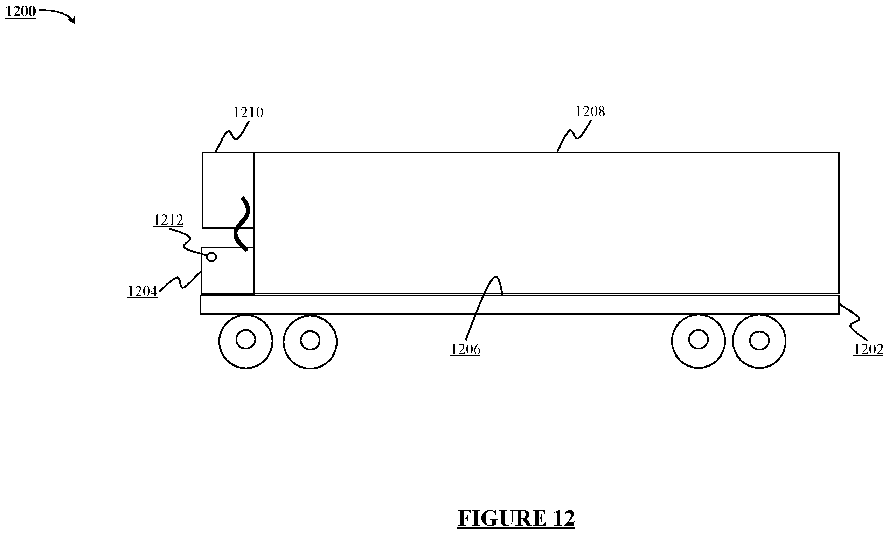

Figure 12 illustrates a railcar 1200 having a railcar chassis 1202 and the second power unit 1204 on a storage section 1206 of the railcar chassis 1202, according to an embodiment of this invention. In such a configuration, the second power unit 1204 is placed next to a cargo container 1208 installed on the storage section 1206. The second power unit 1204 is smaller than the large-sized second power unit 1104 shown in Figure 11 and may be coupled to a refrigeration unit 1210 of the cargo container 1208. Such a configuration may be used to provide electric power for a short duration or for smaller cooling needs. Further, the second power unit 1204 may include a charging port 1212 to charge the second power unit 1204.

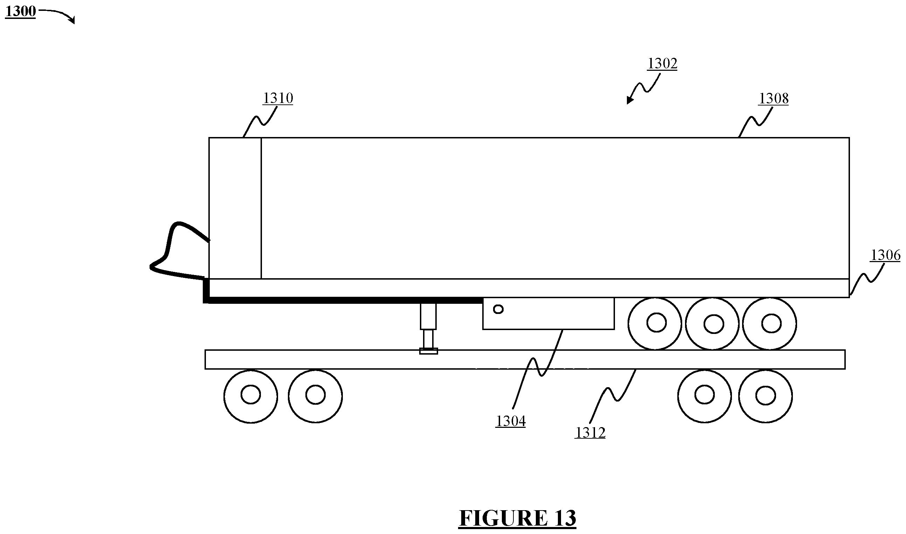

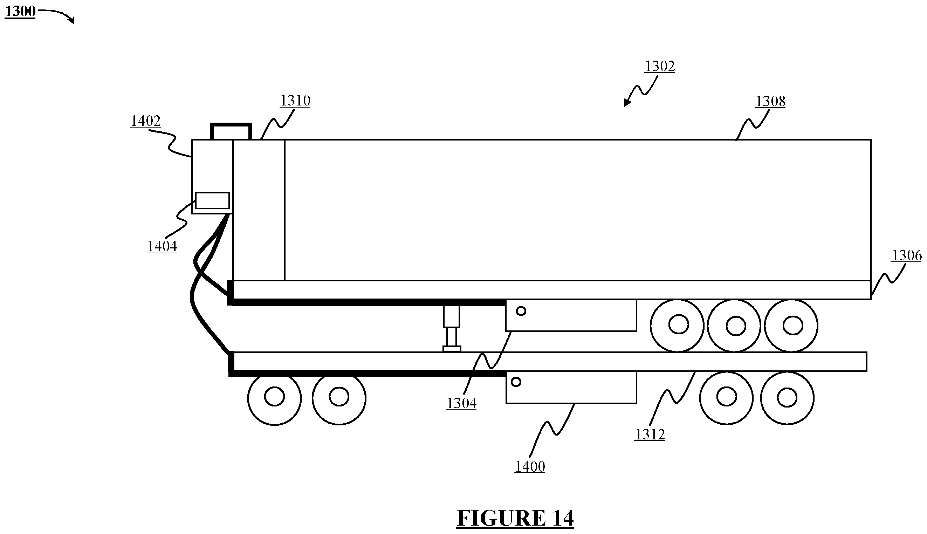

Similar to the embodiments shown in Figures 8 and 9, the cargo container may be transferred to the chassis of a lorry or a truck for further inland transport. In some scenarios, the railcar may accommodate a container chassis that may be further connected to a semi-trailer truck which is illustrated in Figures 13 and 14.

Figure 13 illustrates a railcar 1300 with a trailer 1302 and the second power unit 1304, according to an embodiment of the invention. The trailer 1302 may include a trailer chassis 1306, a cargo hold 1308 supported on the trailer chassis 1306, and a refrigeration unit 1310. In the illustrated example, the second power unit 1304 has a battery pack mounted on the trailer chassis 1306. In one example, the railcar 1300 may have an additional second power units 1400 as shown in Figure 14. The additional second power units 1400 may be installed underneath the railcar chassis 1312. Further, the additional second power units 1400 may provide power to the enables different configurations as explained above with respect to Figure 7.

According to this invention, the railcar chassis may also include a combination of the first power unit and the second power unit that work synergistically to power the refrigeration unit. As shown in Figure 14, the second power unit may provide electric power to the refrigeration unit and a first power unit 1402 having may generate electricity to either power the refrigeration unit 1310 or charge the battery of the second power unit 1304. The first power unit 1402 may include a clip-on power generator which may be a fuel cell unit with an in-built power distribution system. The first power unit 1402 may also include an on-board storage cylinder 1404 that stores for hydrogen fuel for consumption by the fuel cell. Such a configuration enables autonomy in powering the refrigeration unit 1310 when the trailer 1302 is offloaded from the railcar chassis 1312 and mounted on a truck. For that shorter time period, the on-board storage cylinder 1404 provides hydrogen fuel to the fuel cell in the first power unit 1402 to generate the electric power for the refrigeration unit.

Alternatively, the first power unit and the second power unit may operate simultaneously to provide electric power. Further, the amount of electric power drawn from each of the first power units and the second power unit may depend on various factors, such as the volume of available hydrogen fuel, and the state of charge of the battery, whether the system is stationary or in motion, depending on ambient temperature, among other examples.

According to this invention, there may be a scenario the cargo container, such as the cargo container 104 shown in Figure 1, may be transferred from the maritime cargo freight system 100 to the railway cargo freight system 200 as the cargo container 204 shown in Figure 2. Further, in order to transfer the cargo container 104, the cargo containers 104 are disconnected from the power unit 110 and is subsequently installed on the railcars 202 and connected to the power unit 210. During the transition, the cargo container 104, 204 are not powered by either of the power units 110 and 210. The cargo containers 104, 204, are designed in to have autonomy in power generation, such that the refrigeration unit of the cargo container can be powered during the transition from one modal transport to another modal transport. The cargo container 104, 204 may include a clip-on power generator that is either using a battery with in-built power distribution system, similar to the ones shown in Figures 11 to 13, or a fuel cell unit with an in-built power distribution system and an on-board storage cylinder with hydrogen, similar to the clip-on power generator 606, 1402, to generate the electric power for the refrigeration unit 106, 206 of the cargo container 104, 204 when the cargo container 104, 204 is moved from the ship 100 to the railcar 200 or the other way around. In one example, the capacity of the battery and the hydrogen storage amount is sufficient to keep the cargo container 104, 204 refrigerated during the transition from one modal transport to another. In such a configuration, when the clip-on power generator 606, 1402 is coupled to the storage container 1400 from the railcar chassis 1312, the storage container 1400 may refill the hydrogen fuel in the storage container within the clip-on power generator 606, 1402. A similar approach may be used for the moving the cargo hold from the cargo freight system 100 on to a container chassis that may have hydrogen storage cylinder or a battery, which can be termed as a lorry.

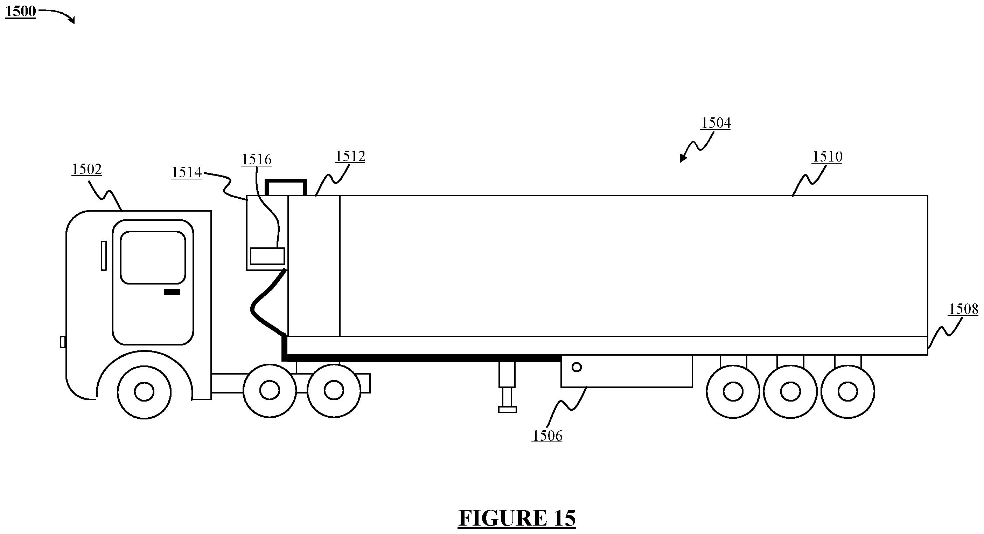

The cargo container of this invention is capable of powering its refrigeration unit when the cargo container is transferred from either cargo freight system 100 or 200 directly to a truck. In such transfers, the cargo container can be powered by a clip-on generator with on-board storage. Such an example is shown in Figure 15 that shows a lorry 1500 having a truck 1502, a cargo container 1504, and a power unit 1506. The power unit 1506 may be either a hydrogen storage or may be a battery pack. Further, the cargo container 1504 may include a container chassis 1508 and a cargo hold 1510 adapted to hold perishable items. The cargo container 1504 may also include a refrigeration unit 1512 that may provide cooling to the cargo hold 1510. Further, the cargo container 1504 may include the power unit 1506 similar to the second power unit 1304 shown in Figure 14 or the storage cylinder 618 shown in Figure 6. In one example, the cargo container 1504 may include a clip-on power generator 1514 that may have on-board storage cylinder 1516 that stores for hydrogen fuel for consumption by fuel cells in the clip-on power generator 1514. Although not shown, the clip-on power generator 1514 may also include a power distribution unit adapted to power the refrigeration unit 1512. During the transfer of the cargo hold 1504 from the cargo freight system 100 or 200 to the truck 1502, the clip-on power generator 1514 may power the refrigeration unit 1512. Such an arrangement imparts autonomy to the cargo container 1504.

The cargo freight system and railcar provide electric power to the refrigeration unit during their transit, thereby ensuring that the cargo container does need not to carry the additional unit to either produce power or carry stored electrical energy. As a result, the cargo container can be designed to ferry a greater volume of goods. Moreover, since the first power unit uses hydrogen fuel, the operation of the first power unit has a lesser negative environmental impact.

While specific language has been used to describe the invention, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

Further embodiments of the present invention will now be described according to the following numbered clauses.
1. A railcar comprising:
   a cargo container having a refrigeration unit;
   a railcar chassis comprising:
      a storage portion configured to receive the cargo container; and
   at least one power unit installed on one of the railcar chassis and the cargo container and configured to provide electrical power to the refrigeration unit.
2. The railcar of clause 1, wherein the cargo container has a container chassis configured to receive a cargo hold, wherein the at least one power unit is detachably installed on the container chassis.
3. The railcar of clause 1 or 2, wherein the at least one power unit comprises a first power unit having:
   a storage cylinder configured to store hydrogen fuel; and
   a power generator detachably installed on the cargo container and coupled to the storage cylinder to receive the hydrogen fuel for generating a first predefined amount of electrical power for the refrigeration unit.
4. The railcar of any of the preceding clauses, wherein the at least one power unit comprises a second power unit configured to provide a second predefined amount of electrical power to the refrigeration unit.
5. The railcar of clause 4, wherein the second power unit is a battery configured to provide the second predefined amount of electrical power to the refrigeration unit.
6. The railcar of any of the preceding clauses, wherein the power generator is one of an internal combustion engine coupled to an electric generator, or a fuel cell system.
7. A cargo freight system comprising:
   a storage portion;
   a plurality of cargo containers installed in the storage portion, wherein the cargo container has the refrigeration unit; and
   at least one power unit positioned proximate to the storage portion and configured to provide electrical power to the refrigeration unit.
8. The cargo freight system of clause 7, wherein the cargo freight system is a cargo ship and at least one power unit is installed in the hull of the cargo ship.
9. The cargo freight system of clause 7, wherein the cargo freight system is a freight train having a railcar, wherein the railcar comprising a railcar chassis having the storage section and the at least one power unit is installed on the railcar chassis.
10. The cargo freight system of any of clauses 7 to 9, wherein the cargo container comprises:
   a container chassis configured to receive a cargo hold;
   at least one power unit is installed on the container chassis; and
   a clip-on power generator having on-board hydrogen cylinder adapted to power the refrigeration unit.
11. The cargo freight system of any of clauses 7 to 10, wherein the at least one power unit comprises a first power unit having:
   a storage cylinder configured to store hydrogen fuel; and
   a power generator coupled to the storage cylinder and configured to receive the hydrogen fuel for generating a first predefined amount of electrical power for the refrigeration unit.
12. The cargo freight system of any of clauses 7 to 11, wherein the second power unit is a battery configured to provide a second predefined amount of electrical power to the refrigeration unit.
13. The cargo freight system of any of clauses 7 to 12, wherein the first power unit and the second power unit are installed underneath the storage portion.
14. The cargo freight system of any of clauses 7 to 13, wherein one of the first power unit and the second power unit are installed on the storage portion.

## Claims

1. A railcar chassis comprising:
a storage portion configured to receive a cargo container having a refrigeration unit; and
at least one power unit positioned proximate to the storage portion and configured to provide electrical power to the refrigeration unit.

2. The railcar chassis of claim 1, wherein the at least one power unit comprises a first power unit having:
a storage cylinder configured to store hydrogen fuel; and
a power generator detachably installed on the cargo container and coupled to the storage cylinder to receive the hydrogen fuel for generating a first predefined amount of electrical power for the refrigeration unit.

3. The railcar chassis of any of the preceding claims, wherein the at least one power unit comprises a second power unit, and wherein the second power unit is a battery configured to provide a second predefined amount of electrical power to the refrigeration unit.

4. The railcar chassis of any of the preceding claims, wherein the power generator is an internal combustion engine coupled to an electric generator, or a fuel cell system.

5. The railcar chassis of any of the preceding claims, wherein the first power unit and the second power unit are installed underneath the storage portion.

6. The railcar chassis of any of the preceding claims, wherein one of the first power unit and the second power unit are attached to the cargo container.

7. A railcar comprising:
a cargo container having a refrigeration unit; and
the railcar chassis of any of the preceding claims.
